# EUROPEAN PATENT SPECIFICATION

(11) **EP 1 100 317 B1**
(45) Date of publication and mention of the grant of the patent: **03.11.2004**
(21) Application number: 00927971.2
(22) Date of filing: 10.05.2000
(51) Int. Cl.: A01K 1/01

(54) **AN UNMANNED VEHICLE FOR DISPLACING MANURE**
UNBEMANNTES FAHRZEUG ZUM VERSCHIEBEN VON MIST
VEHICULE SANS CONDUCTEUR POUR DEPLACER LE FUMIER

(30) Priority: 25.05.1999 NL 1012142
(43) Date of publication of application: 23.05.2001
(73) Proprietor: Lely Enterprises AG, 6300 ZUG (CH)
(72) Inventor: VAN DEN BERG, Karel, NL-2971 BR Bleskensgraaf (NL)
(74) Representative: Corten, Maurice Jean F.M.
(86) International application number: PCT/NL2000/000313
(87) International publication number: WO 2000/070937

(56) References cited:
- EP-A- 0 402 764
- EP-A- 0 943 235
- WO-A-97/31524
- DE-A- 4 425 924
- DE-B- 1 109 441
- DE-B- 1 183 301
- US-A- 2 966 256
- US-A- 5 309 592
- US-A- 5 444 893

## Description

The invention relates to an unmanned vehicle according to the preamble of claim 1.

Such an unmanned vehicle is known from US 2,966,256.

The invention aims at providing an alternative unmanned vehicle.

This is in accordance with the invention achieved by the characterizing features of claim 1. According to the invention manoeuvring of the vehicle is possible by varying the peripheral velocity of the propelling members. Moreover, the drive unit of the propelling members also constitutes the steering unit of the unmanned vehicle. Accordingly, there is achieved a compact construction which is insensitive to dirt and which, besides, is less complicated, so that lower manufacture costs are involved.

According to an inventive feature, the unmanned vehicle comprises a steering unit which is constituted by the propelling unit which comprises at least one rotatable propelling member. In this manner there is obtained a particularly compact vehicle which has moreover an excellent manoeuvrability. The propelling members may comprise a wheel and/or a caterpillar track. Caterpillar tracks have the advantage of being less sensitive to skidding than wheels.

In accordance with another inventive feature, the unmanned vehicle is equipped with orientation means for following a path in a space, or determining the position of the vehicle in a space, such as a stable or a meadow. The orientation means comprise floor detection means for detecting apertures in the floor and/or detecting a guide means in the floor, such as the reinforcement in the concrete or an electricity conducting wire. The apertures in the floor are usually provided for removing the manure as described above. When the stable floor is made of concrete, there is usually applied a metal grid in the floor for giving it extra strength. Said grid can be detected by means of the floor detection means with the aid of e.g. an induction coil. Additional orientation means may comprise a compass and/or a gyroscope and/or an air level and/or a clinometer and/or an acceleration meter. These orientation means are nowadays available in a form which is suitable for being applied in electronic circuits, so that integrated orientation means can easily be composed from the various components.

Besides, the orientation means also comprise wall following means for detecting and following a wall, such as a fixed stable wall or the edge of a cubicle. These wall following means extend over at least part of the circumference of the unmanned vehicle. The wall following means may also be disposed on the manure displacing means. In a preferred embodiment, the wall following means consist of a freely rotating substantially round element, such as preferably a wheel and/or a disc and/or a sphere.

Furthermore, the invention relates to an unmanned vehicle which is equipped with orientation means for following a path in a space or determining a position of the vehicle in a space, such as a stable or a meadow. It will be obvious, of course, that the unmanned vehicle is not only capable of being used for displacing manure, but also for other activities, such as spreading material, such as sawdust and straw, determining and controlling the climate in the stable, and determining the behaviour and health of the animals. For that purpose the unmanned vehicle is equipped with orientation means comprising floor detection means for detecting apertures in the floor and/or detecting a guide means in the floor, such as the reinforcement in the concrete or an electricity conducting wire. Moreover, the orientation means may comprise a compass and/or a gyroscope and/or an air level and/or a clinometer and/or an acceleration meter. The orientation means may also comprise wall following means for detecting and following a wall, such as a fixed stable wall or the edge of a cubicle. The wall following means extend preferably over at least part of the circumference of the unmanned vehicle. The wall following means may also be disposed on the manure displacing means. The wall following means consist of a freely rotating, substantially round element. The round element is preferably constituted by a wheel and/or a disc and/or a sphere.

According to another inventive feature, the unmanned vehicle is equipped with protective facilities for protecting the vehicle against obstacles, such as cows' legs, or fixed objects, such as supporting pillars in the stable.

The protective facilities may comprise a bumper and/or a sensor for detecting cows. The protective facilities may also comprise wall following means. The protective facilities may also comprise positioning means for determining the position of an obstacle relative to the unmanned vehicle. The positioning means may comprise a clinometer and/or an acceleration meter. The positioning means are preferably disposed on the wall following means. In this manner it is possible to determine the angular deflection and angular acceleration of e.g. the wall following means, so that information is obtained regarding the position of the obstacle. The signal from the positioning means is used for actuating the steering unit.

The manure displacing means preferably comprise at least one brush and/or at least one manure slide and/or at least one spraying unit.

In accordance with a last inventive feature, the unmanned vehicle is equipped with anti-bumping means for preventing the manure displacing means from moving too far away from the floor. The anti-bumping means comprise a bumper and/or a bracket. The anti-bumping means preferably comprise an anti-bumping sensor for detecting the movement of the manure displacing means away from the floor, which anti-bumping sensor is coupled to the propelling unit. Such an anti-bumping sensor may consist of a switch which is disposed on the bumper or bracket. When the manure slide moves too far away from the stable floor, the switch touches the stable floor, whereupon the unmanned vehicle is caused to run in an opposite direction and bears again with all its supporting means on the stable floor.

The invention will now be explained in further detail with reference to the accompanying drawings.
Figure 1 is a plan view of the unmanned vehicle comprising one rotatable propelling member;
Figure 2 is a side view of the unmanned vehicle comprising one rotatable propelling member;
Figure 3 is a plan view of the unmanned vehicle comprising two independently driven propelling members, and
Figure 4 is a side view of the unmanned vehicle comprising two independently driven propelling members.

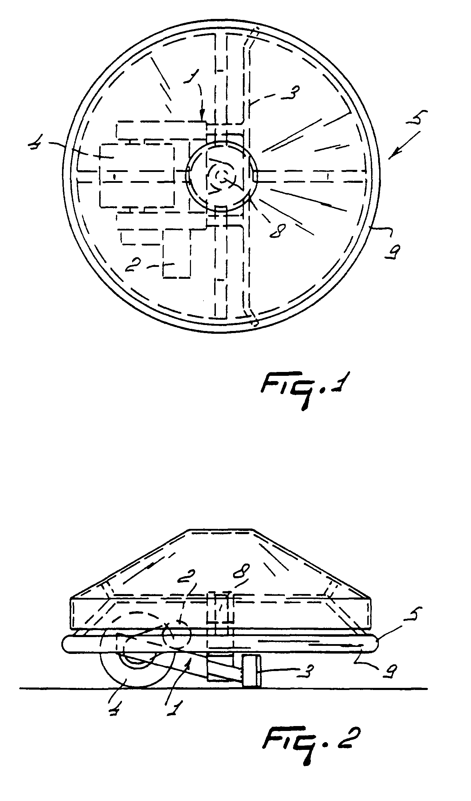

The unmanned vehicle as shown in Figures 1 and 2 consists of a frame 1 which is provided with a propelling unit 2 and a manure slide 3. The (non-shown) steering unit of the unmanned vehicle is constituted by the propelling unit 2, which propelling unit 2 comprises a rotatable wheel 4. As shown in the drawings, in this manner there is obtained a particularly compact vehicle which has moreover an excellent manoeuvrability. On the frame 1 there are also disposed wall following means 5 which, in this embodiment, consist of a wheel 9 which is freely rotatable about a vertical axis 8.

When running the vehicle is propelled by the wheel 4. When the vehicle touches with the wall following means 5 an obstacle, such as a cow's leg, this results in a resultant force on the vehicle, which causes the vehicle to run around the obstacle. The wall following means 5 may also be used for following a wall. In that case the vehicle is constantly caused to run in a direction towards the wall. Subsequently there is exerted by the wall a reactive force on the wall following means in the direction away from the wall. As a result thereof the vehicle runs in a straight line along the wall, while the wall following means 5 remain in contact with the wall.

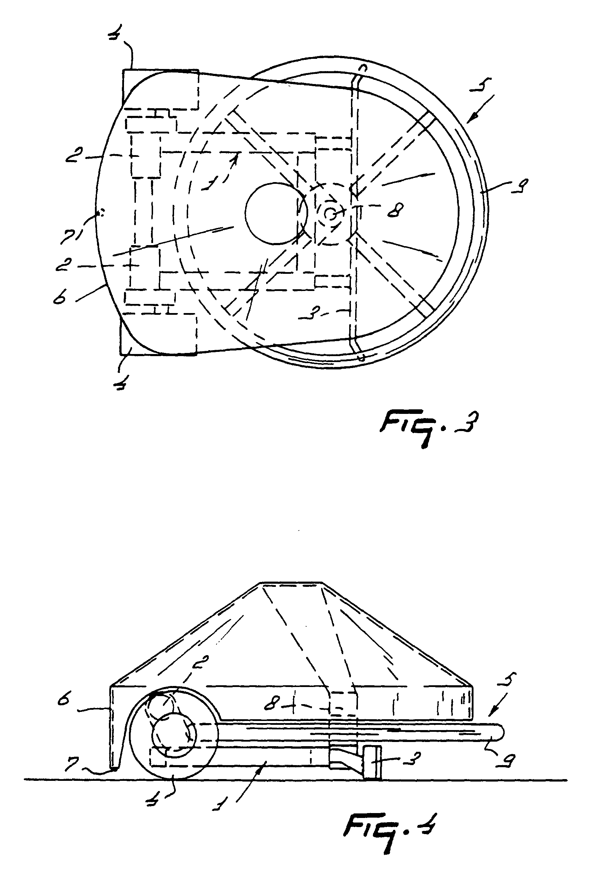

Figures 3 and 4 show another embodiment of the unmanned vehicle, in which parts corresponding to those of the first embodiment are indicated by the same reference numerals. The vehicle is furthermore provided with a bumper 6 which does not only protect the vehicle against obstacles, but also ensures that the manure slide 3 does not move too far away from the stable floor. On the bumper 6 there is also disposed an anti-bumping sensor 7 for detecting movements during which the manure slide moves away from the stable floor.

The way of moving and functioning of the wall following means 5 is identical to that described with reference to the embodiment shown in Figures 1 and 2. Manoeuvring the vehicle is possible by varying the drive torque or the peripheral velocity of the wheels 4. When the anti-bumping sensor 7 detects that the manure slide 3 has moved away from the ground, the unmanned vehicle is caused to run in an opposite direction. In practice the anti-bumping sensor 7 may be constituted by a switch which is connected to the propelling unit 2 in such a manner that the propelling unit causes the vehicle to run in an opposite direction in order to prevent the vehicle from bumping.

## Claims

1. An unmanned vehicle for displacing manure, comprising a steering unit for steering the vehicle, a frame (1) and a propelling unit (2) for propelling the unmanned vehicle, as well as manure displacing means for displacing manure, said manure displacing means are fitted to the unmanned vehicle in such a manner that they are indispensable for supporting and/or propelling the vehicle, **characterized in that** the unmanned vehicle comprises a steering unit which is constituted by the propelling unit (2) which comprises at least two independently driven propelling members (4).

2. An unmanned vehicle as claimed in claim 1, **characterized in that** the propelling member (4) comprises a wheel and/or a caterpillar track.

3. An unmanned vehicle as claimed in claim 1 or 2, **characterized in that** the unmanned vehicle is equipped with orientation means for following a path in a space or determining the position of the vehicle in a space, such as a stable or a meadow.

4. An unmanned vehicle as claimed in claim 3, **characterized in that** the orientation means comprise floor detection means for detecting apertures in the floor and/or detecting a guide means in the floor, such as the reinforcement in the concrete or an electricity conducting wire.

5. An unmanned vehicle as claimed in claim 3 or 4, **characterized in that** the orientation means comprise a compass and/or a gyroscope and/or an air level and/or a clinometer and/or an acceleration meter.

6. An unmanned vehicle as claimed in any one of claims 3 to 5, **characterized in that** the orientation means comprise wall following means (5) for detecting and following a wall, such as a fixed stable wall or the edge of a cubicle.

7. An unmanned vehicle as claimed in claim 6, **characterized in that** the wall following means (5) extend over at least part of the circumference of the unmanned vehicle.

8. An unmanned vehicle as claimed in claim 6 or 7, **characterized in that** the wall following means (5) are disposed on the manure displacing means.

9. An unmanned vehicle as claimed in any one of claims 6 to 8, **characterized in that** the wall following means (5) consist of a freely rotating substantially round element.

10. An unmanned vehicle as claimed in claim 9, **characterized in that** the round element comprises a wheel and/or a disc and/or a sphere.

11. An unmanned vehicle as claimed in any one of the preceding claims, **characterized in that** the unmanned vehicle is equipped with protective facilities for protecting the vehicle against obstacles, such as a cow's leg, or fixed objects, such as supporting pillars in the stable.

12. An unmanned vehicle as claimed in claim 11, **characterized in that** the protective facilities comprise a bumper (6) and/or a sensor for detecting cows.

13. An unmanned vehicle as claimed in claim 11 or 12, **characterized in that** the protective facilities comprise wall following means (5).

14. An unmanned vehicle as claimed in any one of claims 11 to 13, **characterized in that** the protective facilities comprise positioning means for determining the position of an obstacle relative to the unmanned vehicle.

15. An unmanned vehicle as claimed in claim 14, **characterized in that** the positioning means comprise a clinometer and/or an acceleration meter.

16. An unmanned vehicle as claimed in claim 14 or 15, **characterized in that** the signal from the positioning means is used for actuating the steering unit.

17. An unmanned vehicle as claimed in any one of the preceding claims, **characterized in that** the manure displacing means comprise at least one brush and/or at least one manure slide (3) and/or at least one spraying unit.

18. An unmanned vehicle as claimed in any one of the preceding claims, **characterized in that** the unmanned vehicle is equipped with anti-bumping means for preventing the manure displacing means from moving too far away from the floor.

19. An unmanned vehicle as claimed in claim 18, **characterized in that** the anti-bumping means comprise a bumper (6) and/or a bracket.

20. An unmanned vehicle as claimed in claim 18 or 19, **characterized in that** the anti-bumping means comprise an anti-bumping sensor (7) for detecting the movement of the manure displacing means away from the floor, which anti-bumping sensor is coupled to the propelling unit (2).

## Patentansprüche

1. Unbemanntes Fahrzeug zum Verlagern von Mist mit einer Lenkvorrichtung zum Lenken des Fahrzeugs, einem Rahmen (1) und einer Antriebseinheit (2) zum Antreiben des unbemannten Fahrzeuges sowie mit einer Mistverlagerungsvorrichtung zum Verlagern von Mist, wobei die Mistverlagerungsvorrichtung an dem unbemannten Fahrzeug in der Weise angebracht ist, daß sie zum Abstützen und/oder Antreiben des Fahrzeuges unerläßlich ist,
**dadurch gekennzeichnet, daß** das unbemannte Fahrzeug eine Lenkvorrichtung umfaßt, die durch die Antriebseinheit (2) gebildet ist, welche mindestens zwei unabhängig voneinander angetriebene Antriebsglieder (4) umfaßt.

2. Unbemanntes Fahrzeug nach Anspruch 1,
**dadurch gekennzeichnet, daß** das Antriebsglied (4) ein Rad und/oder eine Gleiskette umfaßt.

3. Unbemanntes Fahrzeug nach Anspruch 1 oder 2,
**dadurch gekennzeichnet, daß** das unbemannte Fahrzeug mit einer Orientierungsvorrichtung versehen ist, um einem Weg in einem Raum zu folgen oder die Position des Fahrzeugs in einem Raum, wie z. B. einem Stall oder einer Wiese, zu bestimmen.

4. Unbemanntes Fahrzeug nach Anspruch 3,
**dadurch gekennzeichnet, daß** die Orientierungsvorrichtung eine Bodendetektionsvorrichtung zum Detektieren von Öffnungen im Boden und/oder zum Detektieren einer Leitvorrichtung im Boden, wie z. B. des Stahls im Beton oder eines stromführenden Drahtes, umfaßt.

5. Unbemanntes Fahrzeug nach Anspruch 3 oder 4,
**dadurch gekennzeichnet, daß** die Orientierungsvorrichtung einen Kompaß und/oder ein Gyroskop und/oder eine Nivellierwaage und/oder ein Klinometer und/oder einen Beschleunigungsmesser umfaßt.

6. Unbemanntes Fahrzeug nach einem der Ansprüche 3 bis 5,
**dadurch gekennzeichnet, daß** die Orientierungsvorrichtung eine Wandfolgevorrichtung (5) umfaßt, um eine Wand, wie z. B. eine feste Stallwand oder den Rand einer Box, zu detektieren und ihr zu folgen.

7. Unbemanntes Fahrzeug nach Anspruch 6,
**dadurch gekennzeichnet, daß** sich die Wandfolgevorrichtung (5) zumindest über einen Teil des Umfanges des unbemannten Fahrzeugs erstreckt.

8. Unbemanntes Fahrzeug nach Anspruch 6 oder 7,
**dadurch gekennzeichnet, daß** die Wandfolgevorrichtung (5) auf der Mistverlagerungsvorrichtung angeordnet ist.

9. Unbemanntes Fahrzeug nach einem der Ansprüche 6 bis 8,
**dadurch gekennzeichnet, daß** die Wandfolgevorrichtung (5) aus einem frei drehbaren, im wesentlichen runden Element besteht.

10. Unbemanntes Fahrzeug nach Anspruch 9,
**dadurch gekennzeichnet, daß** das runde Element ein Rad und/oder eine Scheibe und/oder eine Kugel umfaßt.

11. Unbemanntes Fahrzeug nach einem der vorhergehenden Ansprüche,
**dadurch gekennzeichnet, daß** das unbemannte Fahrzeug mit Schutzvorrichtungen ausgestattet ist, um das Fahrzeug vor Hindernissen, wie z. B. einem Kuhbein, oder festen Gegenständen, wie z. B. Stützpfeilern im Stall, zu schützen.

12. Unbemanntes Fahrzeug nach Anspruch 11,
**dadurch gekennzeichnet, daß** die Schutzvorrichtungen eine Prellvorrichtung (6) und/oder einen Sensor zum Detektieren von Kühen umfassen.

13. Unbemanntes Fahrzeug nach Anspruch 11 oder 12,
**dadurch gekennzeichnet, daß** die Schutzvorrichtungen eine Wandfolgevorrichtung (5) umfassen.

14. Unbemanntes Fahrzeug nach einem der Ansprüche 11 bis 13,
**dadurch gekennzeichnet, daß** die Schutzvorrichtungen Positioniervorrichtungen zum Ermitteln der Position eines Hindernisses relativ zu dem unbemannten Fahrzeug umfassen.

15. Unbemanntes Fahrzeug nach Anspruch 14,
**dadurch gekennzeichnet, daß** die Positioniervorrichtungen ein Klinometer und/oder einen Beschleunigungsmesser umfassen.

16. Unbemanntes Fahrzeug nach Anspruch 14 oder 15,
**dadurch gekennzeichnet, daß** das Signal von den Positioniervorrichtungen zum Aktivieren der Lenkvorrichtung verwendet wird.

17. Unbemanntes Fahrzeug nach einem der vorhergehenden Ansprüche,
**dadurch gekennzeichnet, daß** die Mistverlagerungsvorrichtung mindestens eine Bürste und/oder mindestens einen Mistschieber (3) und/oder mindestens eine Sprühvorrichtung umfaßt.

18. Unbemanntes Fahrzeug nach einem der vorhergehenden Ansprüche,
**dadurch gekennzeichnet, daß** das unbemannte Fahrzeug mit einer Antiprellvorrichtung ausgestattet ist, um zu verhindern, daß sich die Mistverlagerungsvorrichtung zu weit vom Boden wegbewegt.

19. Unbemanntes Fahrzeug nach Anspruch 18,
**dadurch gekennzeichnet, daß** die Antiprellvorrichtung eine Prellvorrichtung (6) und/oder einen Bügel umfaßt.

20. Unbemanntes Fahrzeug nach Anspruch 18 oder 19,
**dadurch gekennzeichnet, daß** die Antiprellvorrichtung einen Antiprellsensor (7) umfaßt, um die Bewegung der Mistverlagerungsvorrichtung weg vom Boden zu detektieren, wobei der Antiprellsensor mit der Antriebseinheit (2) verbunden ist.

## Revendications

1. Véhicule sans conducteur pour déplacer le fumier, comprenant une unité de pilotage pour diriger le véhicule, un cadre (1) et une unité de propulsion (2) pour propulser le véhicule sans conducteur, ainsi que des dispositifs de déplacement du fumier pour déplacer le fumier, lesdits dispositifs de déplacement du fumier étant fixés sur le véhicule sans conducteur d'une manière telle qu'ils sont indispensables pour soutenir et / ou propulser le véhicule, **caractérisé en ce que** le véhicule sans conducteur comprend une unité de pilotage qui est constituée par l'unité de propulsion (2) comprenant au moins deux éléments de propulsion (4) entraînés indépendamment.

2. Véhicule sans conducteur selon la revendication 1, **caractérisé en ce que** l'élément de propulsion (4) comprend une roue et / ou une chenille.

3. Véhicule sans conducteur selon la revendication 1 ou 2, **caractérisé en ce que** le véhicule sans conducteur est équipé d'un dispositif d'orientation pour suivre un passage dans un espace ou pour déterminer la position du véhicule dans un espace, tel qu'une étable ou un pré.

4. Véhicule sans conducteur selon la revendication 3, **caractérisé en ce que** le dispositif d'orientation comprend un dispositif de détection au sol pour détecter les ouvertures dans le sol et / ou détecter un dispositif de guidage dans le sol tel qu'un renfort dans le béton ou un câble électriquement conducteur.

5. Véhicule sans conducteur selon la revendication 3 ou 4, **caractérisé en ce que** le dispositif d'orientation comprend une boussole et / ou un gyroscope et / ou un niveau à bulle d'air et / ou un clinomètre et / ou un dispositif de mesure de l'accélération.

6. Véhicule sans conducteur selon l'une quelconque des revendications 3 à 5, **caractérisé en ce que** le dispositif d'orientation comprend un dispositif pour suivre les murs (5) destiné à détecter et à suivre un mur, tel qu'un mur d'étable fixe ou le bord d'une stabulation libre.

7. Véhicule sans conducteur selon la revendication 6, **caractérisé en ce que** le dispositif pour suivre les murs (5) s'étend sur au moins une partie de la circonférence du véhicule sans conducteur.

8. Véhicule sans conducteur selon la revendication 6 ou 7, **caractérisé en ce que** le dispositif pour suivre les murs (5) est disposé sur le dispositif de déplacement du fumier.

9. Véhicule sans conducteur selon l'une quelconque des revendications 6 à 8, **caractérisé en ce que** le dispositif pour suivre les murs (5) est constitué d'un élément sensiblement rond tournant librement.

10. Véhicule sans conducteur selon la revendication 9, **caractérisé en ce que** l'élément rond comprend une roue et / ou un disque et / ou une sphère.

11. Véhicule sans conducteur selon l'une quelconque des revendications précédentes, **caractérisé en ce que** le véhicule sans conducteur est équipé d'un dispositif de protection pour protéger le véhicule des obstacles, tels que la jambe d'une vache, ou des objets fixes, tels que les piliers de soutènement dans l'étable.

12. Véhicule sans conducteur selon la revendication 11, **caractérisé en ce que** le dispositif de protection comprend un pare-chocs (6) et / ou un capteur pour détecter les vaches.

13. Véhicule sans conducteur selon la revendication 11 ou 12, **caractérisé en ce que** le dispositif de protection comprend un dispositif pour suivre les murs (5).

14. Véhicule sans conducteur selon l'une quelconque des revendications 11 à 13, **caractérisé en ce que** le dispositif de protection comprend un dispositif de positionnement pour déterminer la position d'un obstacle par rapport au véhicule sans conducteur.

15. Véhicule sans conducteur selon la revendication 14, **caractérisé en ce que** le dispositif de positionnement comprend un clinomètre et / ou un dispositif de mesure de l'accélération.

16. Véhicule sans conducteur selon la revendication 14 ou 15, **caractérisé en ce que** le signal provenant du dispositif de positionnement est utilisé pour actionner l'unité de pilotage.

17. Véhicule sans conducteur selon l'une quelconque des revendications précédentes, **caractérisé en ce que** le dispositif de déplacement du fumier comprend au moins une brosse et / ou au moins une glissière pour le fumier (3) et / ou au moins une unité de pulvérisation.

18. Véhicule sans conducteur selon l'une quelconque des revendications précédentes, **caractérisé en ce que** le véhicule sans conducteur est équipé d'un dispositif anti-chocs pour éviter que le dispositif de déplacement du fumier s'éloigne trop du sol.

19. Véhicule sans conducteur selon la revendication 18, **caractérisé en ce que** le dispositif anti-chocs comprend un pare-chocs (6) et / ou un support.

20. Véhicule sans conducteur selon la revendication 18 ou 19, **caractérisé en ce que** le dispositif anti-chocs comprend un capteur anti-chocs (7) pour détecter le mouvement du dispositif de déplacement du fumier lorsqu'il s'éloigne du sol, lequel capteur anti-chocs est couplé à l'unité de propulsion (2).
